# EUROPÄISCHE PATENTSCHRIFT

(11) **EP 1 561 172 B1**
(45) Veröffentlichungstag und Bekanntmachung des Hinweises auf die Patenterteilung: **06.08.2008**
(21) Anmeldenummer: 03769223.3
(22) Anmeldetag: 29.09.2003
(51) Int. Cl.: G06F 17/30

(54) **VORRICHTUNG ZUR BEREITSTELLUNG EINES ZUGRIFFS AUF DATEN**
DEVICE FOR PROVISION OF ACCESS TO DATA
DISPOSITIF OFFRANT L'ACCES A DES DONNEES

(30) Priorität: 15.11.2002 DE 10253385
(43) Veröffentlichungstag der Anmeldung: 10.08.2005
(73) Patentinhaber: SIEMENS AKTIENGESELLSCHAFT, 80333 München (DE)
(72) Erfinder: BIEBER, Jürgen, 76275 Ettlingen (DE)
(86) Internationale Anmeldenummer: PCT/DE2003/003237
(87) Internationale Veröffentlichungsnummer: WO 2004/046958

(56) Entgegenhaltungen:
- "UNIX Desktop Integration in the Thin Client/Server Based Environment" WWW.THINCLIENT.NET, [Online] 22. April 2001 (2001-04-22), XP002269082 Gefunden im Internet: URL:http://web.archive.org/web/20010422055 352/http://www.thinclient.net/technology/u nix_integration.htm> [gefunden am 2004-02-04]

## Beschreibung

Die Erfindung betrifft eine Vorrichtung zur Bereitstellung eines Zugriffs auf Daten verschiedener Datenquellen gemäß dem Oberbegriff des Patentanspruchs 1.

In einem Unternehmen werden vielfältige, unterschiedliche Systeme bzw. Einrichtungen zur Planung und Durchführung von zum Beispiel einer Produktion eingesetzt. Exemplarisch soll hier auf sogenannte ERP-Einrichtungen (Enterprise Resource Planning-Einrichtungen), MES-Einrichtungen (Maintenance Execution System-Einrichtungen) sowie auf Automatisierungseinrichtungen verwiesen werden. Die ERP-Einrichtungen sowie MES-Einrichtungen dienen in der Regel der Produktionsvorbereitung sowie Produktionsplanung. Die Automatisierungssysteme werden direkt im Produktionsfeld zur Steuerung, Regelung oder auch Überwachung einer Produktionsanlage eingesetzt.

Um einem Benutzer bzw. User einen Zugriff auf die in den verschiedenen Einrichtungen bzw. Datenquellen gespeicherten Daten zu ermöglichen, stellt nach dem Stand der Technik jede in einem Unternehmen verwendete Datenquelle in der Regel eine eigene, separate Schnittstelle zum Zugriff auf die in der jeweiligen Datenquelle enthaltenen Daten bereit. Benötigt demnach ein Benutzer zum Beispiel Daten der Automatisierungseinrichtung, so gewährleistet die Automatisierungseinrichtung über eine separate Schnittstelle Zugriff auf die in derselben gespeicherten Daten. Zum Zugriff auf Daten der ERP-Einrichtung hält dieselbe eine eigene Schnittstelle bereit.

Daraus folgt unmittelbar, dass auf die unterschiedlichen, produktionsrelevanten Daten in einem Unternehmen derzeit nur jeweils dezentral zugegriffen werden kann. Ein User muss demnach sehr viele Applikationen und Installationen bereithalten, um sich Zugriff auf die verschiedenen Datenquellen zu ermöglichen. Weiterhin ist es nach dem Stand der Technik nicht möglich, die Daten unterschiedlicher Datenquellen miteinander zu kombinieren und so eine übergreifende Sicht auf die produktionsrelevanten Daten des Unternehmens zu ermöglichen. Weiterhin müssen bedingt durch den dezentralen Zugriff auf die verschiedenen Datenquellen verschiedene Links, Passwörter und dergleichen für die einzelnen Datenquellen verwaltet werden. Nach dem Stand der Technik ist es demnach nicht möglich, dem erhöhten Bedarf an Informationen, Auswertungen und Visualisierungen von in unterschiedlichen Einrichtungen bereitgehaltenen, produktionsrelevanten Daten eines Unternehmens gerecht zu werden.

Es ist bekannt, dass eine Windows-Applikation, ohne ein zusätzliches Login für Windows gebraucht zu werden, unter einem UNIX-System möglich ist. Hierbei kann die Windows-Applikation mit Hilfe von NIS (Network Information System) dem UNIX angepasst werden. Der Zugriff ist hierbei aber kein einheitlicher und zentraler Zugriff, da der Zugriff auf die Daten der beiden Systeme nur unter UNIX möglich ist. Dafür benötigt man zudem noch eine spezielle Schnittstelle, wie z.B. CDE oder KDE, die installiert werden muss. Wenn man andersrum auf die Daten von UNIX unter Windows zugreifen will, muss man jedoch vorher Gebrauch von einer anderen Schnittstelle, z.B. X-windows, machen, d.h. es erfolgt ein anderer Zugriff. Um einen oben genannten Zugriff zu realisieren, müssen viele Applikationen und Installationen bereitgehalten werden. Außerdem können das Windows- und das UNIX-System nicht gleichzeitig in Betrieb sein. Der Zugriff auf Daten der beiden Systeme ist folglich sehr begrenzt. Hierbei kann man nur die Daten des Windows-Systems auf Basis des UNIX-Systems sehen oder ausdrucken.

Hiervon ausgehend liegt der vorliegenden Erfindung das Problem zu Grunde, eine neuartige Vorrichtung zur Bereitstellung eines Zugriffs auf Daten verschiedener Datenquellen zu schaffen.

Dieses Problem wird dadurch gelöst, dass die eingangs genannte Vorrichtung zur Bereitstellung eines Zugriffs auf Daten verschiedener Datenquellen durch die Merkmale des kennzeichnenden Teils des Patentanspruchs 1 weitergebildet ist.

Erfindungsgemäß verfügt die Vorrichtung über Mittel, die einen einheitlichen Zugriff auf alle Datenquellen und eine einheitliche Visualisierung der Daten der entsprechenden Datenquellen ermöglichen.

Bei den Datenquellen handelt es sich um eine Automatisierungseinrichtung und/oder eine ERP-Einrichtung und/oder eine MES-Einrichtung und/oder eine sonstige Datenquelle mit produktionsrelevanten Daten.

Nach einer vorteilhaften Weiterbildung der Erfindung ermöglichen die Mittel einen rollenbasierten Zugriff auf die Daten der verschiedenen Datenquellen, derart, dass für einen oder mehrere User ein einheitlicher, zentraler Zugriff auf für den jeweiligen User vorbestimmte Datenquellen und eine für den User vorbestimmte Visualisierung dieser Daten gewährleistet ist.

Bevorzugte Weiterbildungen der Erfindung ergeben sich aus den Unteransprüchen und der nachfolgenden Beschreibung.

Nachfolgend wird ein bevorzugtes Ausführungsbeispiel der Erfindung - ohne hierauf beschränkt zu sein - anhand der Zeichnung näher erläutert. In der Zeichnung zeigt:
- Fig. 1: ein Blockschaltbild zur Verdeutlichung des Standes der Technik;
- Fig. 2: ein Blockschaltbild zur Verdeutlichung der Erfindung zu Grunde liegenden Prinzips; und
- Fig. 3: ein Blockschaltbild zur Verdeutlichung der Funktionsweise der erfindungsgemäßen Vorrichtung zur Bereitstellung eines Zugriffs auf Daten verschiedener Datenquellen.

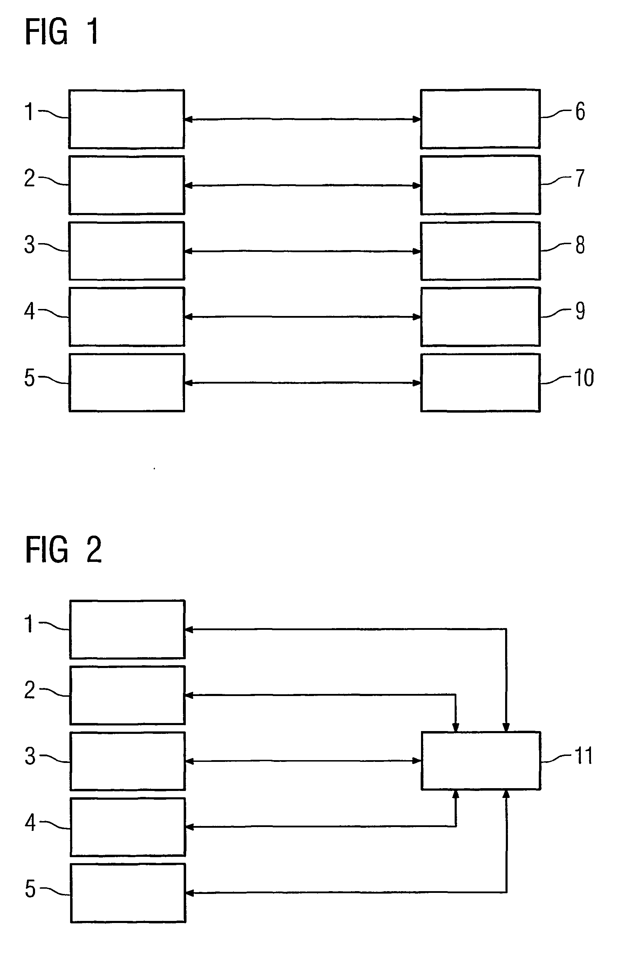

Fig. 1 zeigt stark schematisiert den nach dem Stand der Technik üblichen Zugriff auf Daten, die in unterschiedlichen Datenquellen enthalten sind. So zeigt Fig. 1 insgesamt fünf Datenquellen 1, 2, 3, 4 und 5. Bei der Datenquellen 1 handelt es sich vorzugsweise um eine MES-Einrichtung, eine sogenannte Maintenance Execution System-Einrichtung. Bei der Datenquelle 2 handelt es sich hingegen vorzugsweise um eine ERP-Einrichtung, die auch als Enterprise Resource Planning-Einrichtung bezeichnet wird. Bei der Datenquelle 3 kann es sich um eine Automatisierungseinrichtung, zum Beispiel um ein SPS-Steuerungssystem handeln. Bei der Datenquelle 4 kann es sich zum Beispiel um eine Datenbank mit historischen Produktionsdaten handeln. Bei der Datenquellen 5 handelt es sich vorzugsweise um eine Datenbank mit kundenspezifischen Daten. Es ist selbstverständlich, dass eine Vielzahl anderer Datenquellen in einem Unternehmen vorliegen können. Die hier aufgeführten Datenquellen 1 bis 5 stellen lediglich eine exemplarische Auswahl von produktionsrelevanten Datenquellen dar.

Gemäß dem Stand der Technik stellt jeder der Datenquellen 1 bis 5 eine separate Schnittstelle 6, 7, 8, 9 und 10 bereit. Jede der Schnittstellen 6 bis 10 ist eine für die entsprechende Datenquelle 1 bis 5 spezifische Schnittstelle. Für jede der Schnittstellen 6 bis 10 benötigt ein User, der sich Zugriff auf Daten der jeweiligen Datenquelle verschaffen möchte, ein eigenes Passwort, eine eigene Software und dergleichen. Nach dem Stand der Technik wird demnach auf die Datenquellen 1 bis 5 dezentral zugegriffen.

Im Sinne der Erfindung wird eine Vorrichtung zur Bereitstellung eines Zugriffs auf die Daten der verschiedenen Datenquellen 1 bis 5 bereitgestellt, die einen einheitlichen, zentralen Zugriff auf alle Datenquellen 1 bis 5 ermöglicht. Hierzu umfasst die Vorrichtung Mittel, insbesondere eine Schnittstelle 11, mit der ein User einheitlich und zentral auf alle verschiedenen Datenquellen 1 bis 5 zugreifen kann. Im Sinne der Erfindung wird demnach ein sogenannter "Single Point of Access" auf alle in einem Unternehmen vorhandenen Datenquellen geschaffen (siehe Fig.2).

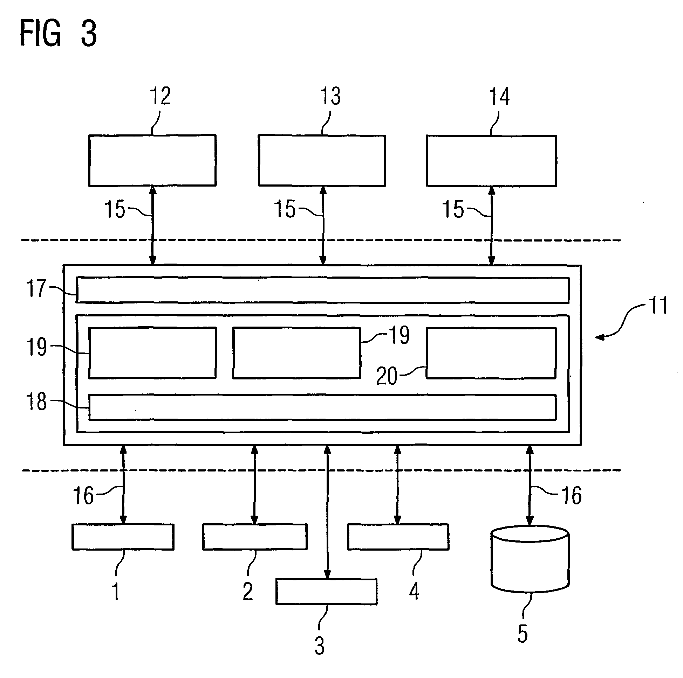

Die Details der erfindungsgemäßen Vorrichtung werden nachfolgend im Zusammenhang mit Fig. 3 näher erläutert. So zeigt Fig. 3 mehrere User 12, 13 und 14, die auf die Datenquellen 1 bis 5 zugreifen. Für jeden der User 12, 13 und 14 wird ein zentraler sowie einheitlicher Zugriff auf alle Datenquellen 1 bis 5 über die Schnittstelle 11 gewährleistet. Da die erfindungsgemäße Vorrichtung zur Bereitstellung eines Zugriffs auf die verschiedenen Datenquellen 1 bis 5 demnach von mehreren Usern 12 bis 14 gleichzeitig genutzt werden kann, ist dieselbe multiuserfähig ausgestaltet. Darüber hinaus ermöglicht die Schnittstelle 11 einen zentralen Zugriff auf alle produktionsrelevanten Daten aller im Unternehmen vorhandenen Datenquellen.

Die Schnittstelle 11 umfasst eine Zugriffsverwaltungseinrichtung 17. Diese Zugriffsverwaltungseinrichtung 17 kann auch als Portal-Framework bezeichnet werden. Die Zugriffsverwaltungseinrichtung 17 realisiert insbesondere einen passwortgeschützten Zugriff auf die Datenquellen 1 bis 5 des Unternehmens.

So muss ein User 12, 13 oder 14, der zum Bespiel über eine Internetdatenleitung 15 oder über eine andere Datenleitung (zum Beispiel LAN, WAP) auf die Schnittstelle 11 zugreift, ein Passwort eingeben, bevor die Zugriffsverwaltungseinrichtung 17 den Zugriff auf die Datenquellen 1 bis 5 gestattet. In der Zugriffsverwaltungseinrichtung 17 sind solche Login-Passwörter abgelegt und beim Anwählen der erfindungsgemäßen Vorrichtung durch einen der User 12 bis 14 wird in der Zugriffsverwaltungseinrichtung 17 überprüft, ob das durch einen der User 12, 13 oder 14 eingegebene Passwort dem in der Zugriffsverwaltungseinrichtung 17 hinterlegten Passwort entspricht. In der Zugriffsverwaltungseinrichtung 17 werden demnach Security-Funktionen realisiert.

Weiterhin gewährleistet die Zugriffsverwaltungseinrichtung 17 einen rollenbasierten Zugriff des oder jeden Users 12, 13 und 14 auf die Daten der verschiedenen Datenquellen 1 bis 5. Unter einem rollenbasierten Zugriff ist zu verstehen, dass die Zugriffsverwaltungseinrichtung 17 zum Beispiel anhand des Passworts den User 12, 13 oder 14 identifiziert und anhand dieser Identifikation dem User den Zugriff auf vorbestimmte Datenquellen ermöglicht, den Zugriff auf andere Datenquellen jedoch nicht erlaubt. Hierdurch ist es möglich, für jeden unterschiedlichen User einen speziellen, individuellen Zugriff auf alle Datenquellen 1 bis 5 zu ermöglichen. Zur Erläuterung sei angemerkt, dass zum Beispiel für einen Management-User andere prozessrelevante Daten von Interesse sind wie zum Beispiel für einen Service-User oder Qualitätssicherungs-User. Mithilfe eines solchen rollenbasierten Zugriffs auf die unterschiedlichen Datenquellen 1 bis 5 ermöglicht die erfindungsgemäße Vorrichtung demnach eine Vorfilterung der Datenvielfalt, die für jeden möglichen User individuell definiert sein kann.

Weiterhin umfasst die erfindungsgemäße Vorrichtung eine Datenakquirierungseinrichtung 18. Diese Datenakquirierungseinrichtung 18 kann auch als Portal-Webservice bezeichnet werden. Die Datenakquirierungseinrichtung 18 greift auf die unterschiedlichen Datenquellen 1 bis 5 zu, und zwar gesteuert durch die Zugriffsverwaltungseinrichtung 17. Die Datenakquirierungseinrichtung 18 steht hierzu mit jeder der Datenquellen 1 bis 5 in Kontakt und tauscht mit jeder der Datenquellen 1 bis 5 zum Beispiel über eine Internetdatenleitung 16 Informationen aus. Meldet sich zum Beispiel ein Management-User durch Eingabe des entsprechenden Passworts an der erfindungsgemäßen Vorrichtung an, so bestimmt die Zugriffsverwaltungseinrichtung 17 die für den Management-User relevanten Datenquellen, zum Beispiel die Enterprise Resource Planning-Datenquellen und die Datenquelle über historische Informationen, und veranlasst die Datenakquirierungseinrichtung 18 von den vorbestimmten Datenquellen die entsprechenden Daten abzurufen.

Weiterhin umfasst die erfindungsgemäße Vorrichtung eine Visualisierungseinrichtung mit mehreren Visualisierungskomponenten 19. Die Visualisierungskomponenten 19 können auch als Portal-Module bezeichnet werden. Über die Visualisierungskomponenten 19 werden die von der Datenakquirierungseinrichtung 18 von den unterschiedlichen Datenquellen 1 bis 5 abgerufenen Daten für den oder jeden User 12 bis 14 einheitlich visualisiert. Die auf Basis der sogenannten ASP.NET-Technologie realisierten Visualisierungskomponenten 19 stellen vorzugsweise Daten der unterschiedlichen Datenquellen 1 bis 5 in einem Visualisierungsfenster gleichzeitig bzw. gemeinsam dar. Hierdurch wird für den User eine sehr komfortable und einfache Sicht auf alle produktionsrelevanten bzw. unternehmens- und fertigungsrelevanten Daten des Unternehmens ermöglicht.

Weiterhin verfügt die erfindungsgemäße Vorrichtung über eine von den Usern 12 bis 14 frei konfigurierbare Abfrageinrichtung 20. Eine solche Abfrageeinrichtung kann auch als Portal-Agent bezeichnet werden. Mit einer solchen Abfrageeinrichtung ist es den Usern 12 bis 14 möglich, durch zum Beispiel zyklische Abfragen in unterschiedlichen Datenquellen 1 bis 5 bereitgehaltene Daten zu erfassen, zu überwachen und derart auszuwerten, dass bei Erreichen eines vom User 12, 13 oder 14 definierten Kriteriums automatisch eine entsprechende Meldung erzeugt wird, der User 12, 13 oder 14 demnach vom Erreichen des Kriteriums benachrichtigt wird. In diesem Fall werden vorzugsweise alle relevanten Daten derart zusammengestellt, dass dem Benutzer beim nächsten Login alle Ergebnisse automatisiert zur Verfügung gestellt und visualisiert werden, die der Portal-Agent automatisiert erfasst bzw. zusammengestellt hat. Hierdurch ist es möglich, im Hintergrund und automatisch ohne Präsenz des Users über die erfindungsgemäße Vorrichtung Produktionskriterien zu definieren, deren Erreichen von der erfindungsgemäßen Vorrichtung automatisch überwacht wird.

## Patentansprüche

1. Vorrichtung zur Bereitstellung eines Zugriffs auf Daten folgender Datenquellen (1, 2, 3, 4, 5): (22, 23) Daten einer Automatisierungseinrichtung und/oder Daten einer ERP-Einrichtung und/oder Daten einer MES-Einrichtung und/oder sonstige produktionsrelevante Daten einer sonstigen Datenquelle,
- wobei die Vorrichtung Mittel aufweist, um einen einheitlichen, zentralen Zugriff auf alle Datenquellen (1, 2, 3, 4, 5) und eine einheitliche Visualisierung der Daten der entsprechenden Datenquellen (1, 2, 3, 4, 5) zu ermöglichen, und
- wobei die Vorrichtung eine von Usern (12, 13, 14) konfigurierbare Abfrageeinrichtung (20) aufweist, um Daten von unterschiedlichen Datenquellen (1, 2, 3, 4, 5) zyklisch zu erfassen und derart auszuwerten, dass bei Erreichen eines von den Usern konfigurierbaren Kriteriums automatisch eine entsprechende Meldung erzeugt wird.

2. Vorrichtung nach Anspruch 1, **dadurch gekennzeichnet, dass** die Mittel einen rollenbasierten Zugriff auf die Daten der verschiedenen Datenquellen (1, 2, 3, 4, 5) ermöglichen, derart, dass für einen oder mehrere User (12, 13, 14) ein einheitlicher Zugriff auf für den jeweiligen User (12, 13, 14) vorbestimmte Datenquellen (1, 2, 3, 4, 5) und eine für den User vorbestimmte Visualisierung dieser Daten gewährleistet ist.

3. Vorrichtung nach Anspruch 1 oder 2, **dadurch gekennzeichnet, dass** die Mittel eine Zugriffsverwaltungseinrichtung (17) umfassen, um einen passwortgeschützten Zugriff und einen rollenbasierten Zugriff eines oder mehrerer User (12, 13, 14) auf die Daten der verschiedenen Datenquellen (1, 2, 3, 4, 5) zu ermöglichen.

4. Vorrichtung nach einem oder mehreren der Ansprüche 1 bis 3, **dadurch gekennzeichnet, dass** die Mittel eine Visualisierungseinrichtung (19) umfassen, um die Daten der verschiedenen Datenquellen (1, 2, 3, 4, 5) rollenbasiert zu visualisieren.

5. Vorrichtung nach Anspruch 4, **dadurch gekennzeichnet, dass** die Visualisierungseinrichtung (19) Daten unterschiedlicher Datenquellen gemeinsam in einem Visualisierungsfenster visualisiert.

6. Vorrichtung nach einem oder mehreren der Ansprüche 1 bis 5, **dadurch gekennzeichnet, dass** die Mittel eine Datenakquirierungseinrichtung (18) umfassen, um Daten der verschiedenen Datenquellen (1, 2, 3, 4, 5) rollenbasiert zusammenzustellen.

7. Vorrichtung nach Anspruch 6, **dadurch gekennzeichnet, dass** die Datenakquirierungseinrichtung (18) gesteuert durch die Zugriffsverwaltungseinrichtung (17) auf die verschiedenen Datenquellen (1, 2, 3, 4, 5) zugreift und aus diesen Datenquellen Daten erfasst, und dass die Datenakquirierungseinrichtung (18) diese Daten der Visualisierungseinrichtung (17) zur Verfügung stellt.

## Claims

1. A device for the provision of access to data in various data sources (1, 2, 3, 4, 5): (22, 23) Data of an automation device and/or data of an ERP device and/or data of an MES device and/or other production-relevant data of another data source,
- with the device having means that make possible uniform, central access to all data sources (1, 2, 3, 4, 5) and uniform visualization of the data in the corresponding data sources (1, 2, 3, 4, 5) and
- with the device having a polling device (20) configurable by users (12, 13, 14) in order to acquire data cyclically from various data sources (1, 2, 3, 4, 5) and to evaluate said data in such a way that, upon attainment of a criterion configurable by users, a corresponding message is automatically generated.

2. Device in accordance with claim 1, **characterized in that** the means make possible role-based access to the data in the various data sources (1, 2, 3, 4, 5) in such a way that for one or more users (12, 13, 14) uniform access to data sources (1, 2, 3, 4, 5) predetermined for the particular user (12, 13, 14), and visualization of this data predetermined for the user, are ensured.

3. Device in accordance with claim 1 or 2, **characterized in that** the means include an access administration device (17) in order to make possible password-protected access and role-based access for one or more users (12, 13, 14) to the data in the various data sources (1, 2, 3, 4, 5).

4. Device in accordance with one or more of claims 1 to 3, **characterized in that** the means include a visualization device (19) in order to visualize the data in the various data sources (1, 2, 3, 4, 5) in a role-based manner.

5. Device in accordance with claim 4, **characterized in that** the visualization device (19) visualizes data from different data sources jointly in a visualization window.

6. Device in accordance with one or more of claims 1 to 5, **characterized in that** the means include a data acquisition device (18) in order to assemble data from the various data sources (1, 2, 3, 4, 5) in a role-based manner.

7. Device in accordance with claim 6, **characterized in that** the data acquisition device (18) accesses the various data sources (1, 2, 3, 4, 5) in a manner controlled by the access administration device (17) and acquires data from these data sources, and **in that** the data acquisition device (18) makes this data available to the visualization device (17).

## Revendications

1. Dispositif procurant un accès à des données de sources ( 1, 2, 3, 4, 5 ) de données suivantes : ( 22, 23 ) données d'un dispositif d'automatisation et/ou données d'un dispositif ERP et/ou données d'un dispositif MES et/ou autres données pertinentes pour la production d'une autre source de données,
- dans lequel le dispositif a des moyens pour permettre d'avoir un accès central uniforme à toutes les sources ( 1, 2, 3, 4, 5 ) de données et une visualisation uniforme des données des sources ( 1, 2, 3, 4, 5 ) de données correspondantes, et
- dans lequel le dispositif a un dispositif ( 20) d'interrogation pouvant être configuré par des utilisateurs ( 12, 13, 14 ) pour relever cycliquement des données de source ( 1, 2, 3, 4, 5 ) de données différentes et les exploiter, de manière à produire automatiquement un message correspondant lorsqu'un critère pouvant être configuré par les utilisateurs est atteint.

2. Dispositif suivant la revendication 1, **caractérisé en ce que** les moyens permettent d'avoir un accès au fur et à mesure aux données des diverses sources ( 1, 2, 3, 4, 5 ) de données, de façon à assurer pour un ou pour plusieurs utilisateurs ( 12, 13, 14 ) un accès uniforme aux sources ( 1, 2, 3, 4, 5) de données déterminées à l'avance pour chaque utilisateur ( 12, 13, 14 ) et une visualisation de ces données déterminée à l'avance pour l'utilisateur.

3. Dispositif suivant la revendication 1 ou 2,
**caractérisé en ce que** les moyens comprennent un dispositif ( 17 ) de gestion d'accès pour permettre d'avoir un accès protégé par mot de passe et un accès au fur et à mesure d'un ou de plusieurs utilisateurs ( 12, 13, 14 ) de données des diverses sources ( 1, 2, 3, 4, 5 ) de données.

4. Dispositif suivant l'une ou plusieurs des revendications 1 à 3, **caractérisé en ce que** les moyens comprennent un dispositif ( 19 ) de visualisation pour visualiser au fur et à mesure les données des diverses sources ( 1, 2, 3, 4, 5 ) de données.

5. Dispositif suivant la revendication 4, **caractérisé en ce que** le dispositif ( 19 ) de visualisation visualise des données de sources de données différentes conjointement dans une fenêtre de visualisation.

6. Dispositif suivant l'une ou plusieurs des revendications 1 à 5, **caractérisé en ce que** les moyens comprennent un dispositif ( 18 ) d'acquisition de données pour rassembler au fur et à mesure des données des diverses sources ( 1, 2, 3, 4, 5 ) de données.

7. Dispositif suivant la revendication 6, **caractérisé en ce que** le dispositif ( 18) d'acquisition de données accède de manière commandée par le dispositif ( 17 ) de gestion d'accès aux diverses sources ( 1, 2, 3, 4, 5 ) de données et relève à partir de ces sources de données des données, et **en ce que** le dispositif ( 18 ) d'acquisition de données met ces données à disposition du dispositif ( 17 ) de visualisation.
